# EUROPEAN PATENT APPLICATION

(11) **EP 3 163 355 A1**
(43) Date of publication of application: **03.05.2017**
(21) Application number: 15812165.7
(22) Date of filing: 29.05.2015
(51) Int. Cl.: G02B 27/01

(54) **HEAD-UP DISPLAY SYSTEM, HEAD-UP DISPLAY DEVICE, AND NAVIGATION INFORMATION DISPLAY METHOD**

(30) Priority: 27.06.2014 KR 20140079744
(71) Applicant: Kolonauto Co., Ltd, Chungcheongnam-do 32210 (KR)
(72) Inventor: LEE, Soo Chang, Hongseong-gun Chungcheongnam-do 350-883 (KR); LEE, Soo Yeon, Yongin-si Gyeonggi-do 446-797 (KR); MOON, Ji Mook, Yongin-si Gyeonggi-do 446-797 (KR)
(74) Representative: Hauck Patentanwaltspartnerschaft mbB
(86) International application number: PCT/KR2015/005401
(87) International publication number: WO 2015/199339

(57) **Abstract**

The present invention provides a head-up display system including a head-up display device 10 which visually displays information, and a smart phone 30 which provides navigation information for assisting wayfinding through map guidance. The head-up display device 10 includes: a communication unit 12 which establishes a communication connection by requesting a communication connection to a communication unit 32 of the smart phone 30 when power is applied to the head-up display device; a display unit 11 which visually displays navigation information received through the communication unit 12; and a control unit 13 which controls the communication unit 12 and the display unit 11. The smart phone 30 includes: a communication unit 32 which establishes a communication connection in response to the communication connection request from the communication unit 12; a navigation module 31 which generates navigation information; and a control unit 33 which controls the communication unit 32 and the navigation module 31.

## Description

### [Technical Field]

The present invention relates to a head-up display system, a head-up display device, and a navigation information display method of the head-up display device, and more particularly, to a head-up display device capable of displaying important information, which is provided from a navigation installed in a transport means such as an automobile and an airplane, within a driver's view.

### [Background Art]

A head-up display (HUD) refers to a display device designed to display travel information of a transport means in front of a driver without moving eyes of a driver driving the transportation means such as a vehicle or an airplane, and has been used to secure a front view of an aviator in the early stage, but has also been introduced and used in the vehicle in recent years.

Further, the head-up display displays dashboard information such as a speedometer, a fuel gauge, and a thermometer of the vehicle at the initial use in the vehicle, but a head-up display having a function of interworking with a navigation that helps path finding, or the like through a map guide to display specific information on a display screen of the navigation has appeared recently.

Meanwhile, smart phones having a navigation function embedded therein are continuously appearing recently. These smart phones having the navigation function embedded therein automatically update the navigation information such as recent road information through a wireless communication network, thus to provide various conveniences compared to the existing navigation as a unitary body that needs to manually update the navigation information.

However, the smart phone having a navigation embedded therein typically has a screen size of about 5 inches. Therefore, it is difficult for a driver to identify information displayed on the smart phone during driving. In particular, if the smart phone is disposed in a front view of a driver's seat, there is a problem in that the smart phone is not transparent, and thereby obstructs the driver's front view.

To solve the above problem, as a technique of transmitting the navigation information stored in the smart phone to the head-up display and displaying the navigation information on the head-up display, there is a technique described in Patent Document 1.

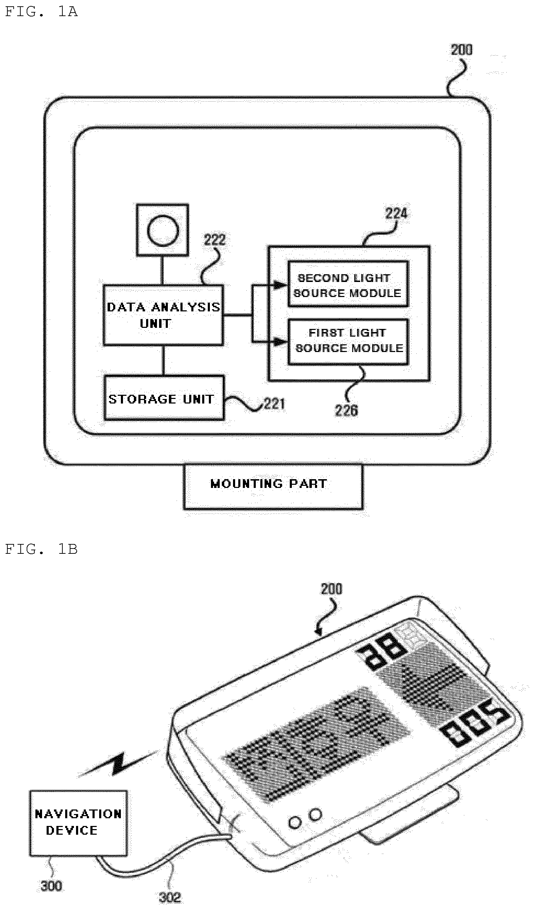

FIG. 1 is views illustrating a configuration of a conventional head-up display device, in which FIG. 1A is a view illustrating the configuration of the conventional head-up display device, and FIG. 1B is a view illustrating a connection configuration between the head-up display device and a navigation.

As illustrated in FIG. 1A, a conventional head-up display device 200 includes: a data analysis unit 222 that extracts numerical data from input data input from a navigation device 300 and generates image data from the input data; a first light source module 226 that projects left and right inverse images to windshield glass using the image data generated by the data analysis 222; a second light source module 224 that projects numerical values of the left and right inverse image to the windshield glass using the extracted numerical data; and a storage unit 221 that stores the input data, the numerical data and the image data.

Further, as illustrated in FIG. 1B, the data analysis 222 of the head-up display device 200 receives the input data from the navigation device 300 by wired and wireless manners such as a cable 302, USB, RS-232, Bluetooth, and a wireless LAN, and provides the inverse image or the numerical value of the inverse image obtained from the input data to the first light source module 226 or the second light source module 224, respectively, and the first light source module 226 and the second light source module 224 respectively projects the inverse image or the numerical value of the inverse image to the front windshield glass, thereby allowing the driver to confirm the projected image or numerical value with eyes.

However, in Patent Document 1, the head-up display device uses an opaque display as the display device thereof, and thereby displays the image or the numerical value on the windshield glass by a projection method. Therefore, there is a problem in that definition of the displayed image cannot but be deteriorated, as well as the transmission and reception relationship of the information required between the head-up display device and the navigation, and the operation relationship thereof are unclear.

### [Prior Art Document]

### [Patent Document]

[Patent Document 1] Korean Patent Laid-Open Publication No. 2010-0001771 (laid-open on February 18, 2010)

### [Disclosure]

### [Technical Problem]

In consideration of the above-mentioned circumstances, it is an object of the present invention to provide a head-up display device capable of using a transparent display as a head-up display and actively requesting navigation information to a navigation side from a head-up display side by interworking with the starting of a transport means such as a vehicle and receiving the requested navigation information.

### [Technical Solution]

In order to achieve the objects, according to an aspect of the present invention, there is provided a head-up display system including a head-up display configured to visually display information, and an electronic device configured to provide navigation information helping path finding using a guide map, wherein the head-up display device includes: a head-up display communication means configured to establish a communication connection with the electronic device by requesting the communication connection to a communication means of the electronic device when power is applied to the head-up display device; a display means configured to visually display the navigation information received from the electronic device through the head-up display communication means; and a head-up display control means configured to control the head-up display communication means and the display means, and the electronic device includes: an electronic device communication means configured to establish the communication connection in response to the communication connection request from the head-up display communication means; a navigation means configured to generate the navigation information; and an electronic device control means configured to control the electronic device communication means and the navigation means.

According to another aspect of the present invention, there is provided a head-up display device which visually displays information visually displaying navigation information received from an electronic device configured to provide the navigation information helping path finding using a guide map, the head-up display device including: a communication means configured to establish a communication connection with the electronic device by requesting the communication connection to the electronic device when power is applied to the head-up display device; a display means configured to visually display the navigation information received from the electronic device through the communication means; and a head-up display control means configured to control the communication means and the display means.

According to another aspect of the present invention, there is provided method for displaying navigation information of a head-up display device configured to visually display information visually displaying navigation information received from an electronic device configured to provide the navigation information helping path finding using a guide map, the method including: a communication connection step of trying to establish a communication connection with the electronic device when power is applied to the head-up display device; a receiving step of receiving the navigation information from the electronic device when the communication connection therebetween is established; and a displaying step of visually displaying the received navigation information.

### [Advantageous Effects]

According to the present invention having the above-described configuration, it is possible to actively request the navigation information to the navigation side from the head-up display side by interworking with the starting of the transport means and receive the requested navigation information.

In addition, it is possible to display the information required for traveling while securing the driver's front view of the transport means by using the transparent display as the display means of the head-up display device.

Further, it is possible to positively promote the activation of the mobile phone by turning on the power supply of the mobile phone by the characters and/or voice when the communication connection between the head-up display device and the smart phone is not established.

### [Description of Drawings]

FIG. 1 is views illustrating a configuration of a conventional head-up display device, in which FIG. 1A is a view illustrating the configuration of the conventional head-up display device, and FIG. 1B is a view illustrating a connection configuration between the head-up display device and a navigation.
FIG. 2 is a block diagram illustrating a configuration of a head-up display system according to preferred Embodiment 1 of the present invention.
FIG. 3 is a flow chart illustrating an operation of the head-up display system according to preferred Embodiment 1 of the present invention.
FIG. 4 is a flow chart illustrating an operation of a head-up display system according to preferred embodiment 2 of the present invention.
FIG. 5 is a flow chart illustrating an operation of a head-up display system according to preferred Embodiment 3 of the present invention.

### [Best Mode]

Hereinafter, preferred embodiments of the present invention will be described in detail with reference to the accompanying drawings.

### 1. Embodiment 1

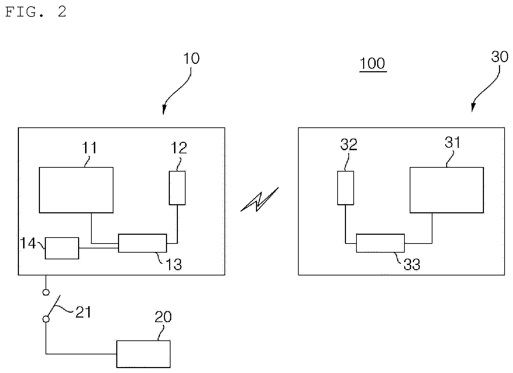

First, preferred Embodiment 1 of the present invention will be described. FIG. 2 is a block diagram illustrating a configuration of a head-up display system according to preferred Embodiment 1 of the present invention.

As illustrated in FIG. 2, a head-up display system 100 according to the present embodiment includes a head-up display device 10 and a smart phone 30, and if necessary, may further include a power supply 20 and a power switch 21 for turning on/off the power supply 20.

The head-up display device 10 is disposed in a range of a front view of a driver (aviator) of a transport means such as a vehicle or an airplane to visually display travel related information (hereinafter, briefly also referred to as 'navigation information') provided from a navigation module 31 of the smart phone 30 to be described below by characters, numbers, diagrams, or the like, and includes a display unit 11, a communication unit 12, and a control unit 13, and if necessary further includes an illumination sensor 14.

Further, the head-up display device 10 may visually display the travel related information provided from the navigation module 31 of the smart phone 30, and in addition, if necessary, aurally provide a voice, a warning sound, or the like.

The head-up display device 10 is supplied with power required for an operation from the power supply 20 installed in the transport means such as a vehicle in which, for example, the corresponding head-up display device 10 is mounted, and the power switch 21 turning on/off the power supplied from the power supply 20 to the head-up display device 10 between the head-up display device 10 and the power supply 20 preferably interworks with an ignition key for starting/stopping an engine of the transport means to turn on the power switch 21 when the ignition key is turned on and turn off the power switch 21 when the ignition key is turned off.

However, the power switch 21 may be independently turned on/off without interworking with the ignition key.

The display unit 11 visually displays the navigation information received from the smart phone 30 to be described below to the driver, and may preferably use the transparent display device like a transparent organic light emitting display device. Herein, as the display unit, for example, the head-up display disclosed in Korean Patent Application No. 10-2013-0112184 filed by the present applicant, or the like may be used.

When power is supplied to the head-up display device 10 by the turn on of the power switch 21, the communication unit 12 is operated to try to establish a communication connection with the smart phone 30 by communication through a communication unit 32 of the smart phone 30 to be described below under the control of the control unit 13, and receives the navigation information from the navigation module 31 through the communication unit 32 of the smart phone 30 when the communication connection therebetween is established.

The communication unit 12 of the head-up display device 10 and the communication unit 32 of the smart phone 30 to be described below are a communication module that may perform near field communication, and for example, are near field communication modules such as Bluetooth, Zigbee, and WiFi. The smart phone that is currently available generally has a Bluetooth module installed therein, but when the smart phone 30 has a near field communication module such as Bluetooth installed therein, as the communication unit 32 of the smart phone 30, the near field communication module installed in the mobile phone is used, and as the communication unit 12 of the head-up display device 10, the same communication module as the near field communication module installed in the mobile phone is used.

The control unit 13 of the head-up display device 10 controls the communication unit 12 to try to establish the communication connection with the communication unit 32 of the smart phone 30, and if the communication connection therebetween is established, controls the navigation information received from the navigation module 31 through the communication unit 32 of the smart phone 30 to be visually displayed through the display unit 11, and if necessary, to be aurally provided.

The navigation information received from the navigation module 31 of the smart phone 30, that is, the information displayed on the display unit 11 of the head-up display device 10 may be appropriately set as necessary, and may be, for example, a driving speed of the transport means, information associated with a regulation of overspeed, information associated with a section regulation, remaining distance/or time up to a destination when the destination is set, information associated with a switching direction in front of a current position such as a left turn or a right turn, information on a toll gate, or the like.

Further, the head-up display device 10 includes the illumination sensor 14, and the illumination sensor 14 may control the brightness of the display unit 11 by referring to illumination around the display unit 11 measured by the control of the control unit 13.

The smart phone 30 may be the known smart phone having various configurations, and in order to achieve the object of the present invention, further includes the navigation module 31, the communication unit 32, and the control unit 33.

The navigation module 31 serves to help path finding, or the like through a guide map, and is preferably embedded in the smart phone 30, and may be, for example, T MAP(registered trade mark), OllehNavi (registered trade mark), KimgisaNavi (registered trade mark), or the like.

The communication unit 32 establishes the communication connection between the head-up display device 10 and the smart phone 30 in response to the try of establishment of the communication connection received from the communication unit 12 of the head-up display device 10 according to the control of the control unit 33, and transmits the data provided from the navigation module 31 to the head-up display device 10 if the communication connection therebetween is established.

The control unit 33 of the smart phone 30 controls the communication unit 32 and the navigation module 31, controls the communication unit 32 to establish the communication connection with the communication unit 12 of the head-up display device 10 if the establishment of the communication connection from the communication unit 12 of the head-up display device 10 is tried, and controls the navigation module 31 to transmit the navigation information to the head-up display device 10.

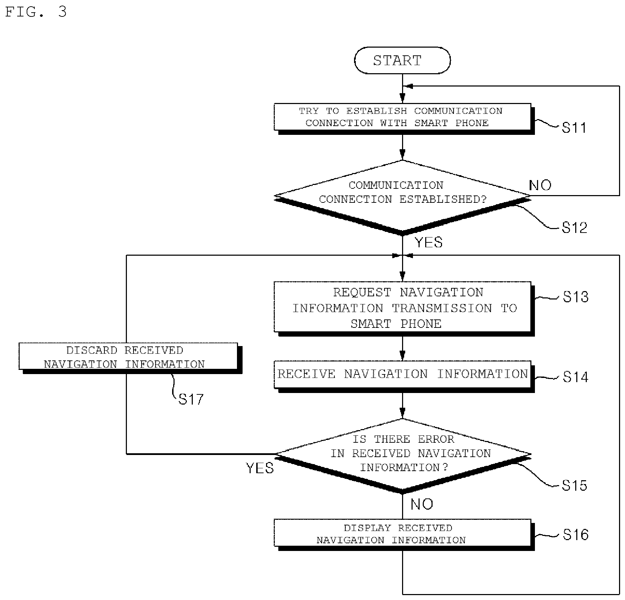

Next, an operation of the head-up display system 100 according to the present embodiment will be described. FIG. 3 is a flow chart illustrating the operation of the head-up display system according to preferred Embodiment 1 of the present invention.

First, when the power switch 21 interworking with the ignition key of the transport means is turned on by starting the transport means in which the head-up display device 10 is installed, power is supplied from the power supply 20 to the head-up display device 10, such that the control unit 13 of the head-up display device 10 controls the communication unit 12 to try to establish the communication with the communication unit 32 of the smart phone 30 (step S11). If the power switch 21 does not interwork with the ignition key of the transport means, a driver may directly turn on or off the power switch 21.

Next, it is confirmed in step S12 whether the communication connection between the communication unit 12 of the head-up display device 10 and the communication unit 32 of the smart phone 30, and if the communication connection therebetween is not established (NO in step S12), the processing returns to step S11 to try to establish the communication connection again.

If it is determined in step S12 that the communication connection therebetween is established (YES in step S12), the processing proceeds to step S13 to request the smart phone 30 to transmit the navigation information.

In detail, the control unit 13 of the head-up display device 10 controls the communication unit 12 to request the communication unit 32 of the smart phone 30 to transmit the navigation information, and thus the control unit 33 of the smart phone 30 controls the communication unit 32 and the navigation module 31 to transmit the navigation information from the navigation module 31 to the communication unit 12 of the head-up display device 10 through the communication unit 32.

Then, the head-up display device 10 receives the navigation information transmitted from the smart phone 30 through the communication unit 12 (step S14).

Next, the control unit 13 of the head-up display device 10 performs an error check on the navigation information received from the smart phone 30 (step S15). As a result of the error check, if it is determined that there is an error in the navigation information received from the smart phone 30 (YES in step S15), the processing proceeds to step S17 to discard the received navigation information, and then returns to step S13 to request the smart phone 30 to transmit new navigation information.

If it is determined in step S15 that there is no error in the navigation information received from the smart phone 30 (NO in step S15), the control unit 13 of the head-up display device 10 controls the display unit 11 to convert the received navigation information into display data and auditory data, as necessary, and output the navigation information as an auditory signal while visually displaying the navigation information (step 16).

The present embodiment uses a cyclical redundancy check (CRC) method as the error check method of the received navigation information, but it is not limited thereto, and in addition to the CRC method, as the error check method of the received navigation information, other known methods may be used. Further, the error check methods such as the CRC are known, and therefore will not be described in detail.

Next, the processing returns to step S13, and the control unit 13 of the head-up display device 10 requests the smart phone 30 to transmit new navigation information, and repeats routines of the steps S13 to S16, thereby continuously updating and displaying the navigation information as the driving information.

According to Embodiment 1, by using the transparent display as the head-up display, it is possible to display the information required for the driving while securing the driver's front view of the transport means, and actively request the navigation information to the navigation side from the head-up display side by interworking with the starting of the transport means to receive the navigation information.

### 2. Embodiment 2

Next, preferred Embodiment 2 of the present invention will be described.

A configuration of a system of Embodiment 2 is the same as that of Embodiment 1, except that there is a difference in a part of the operation therebetween.

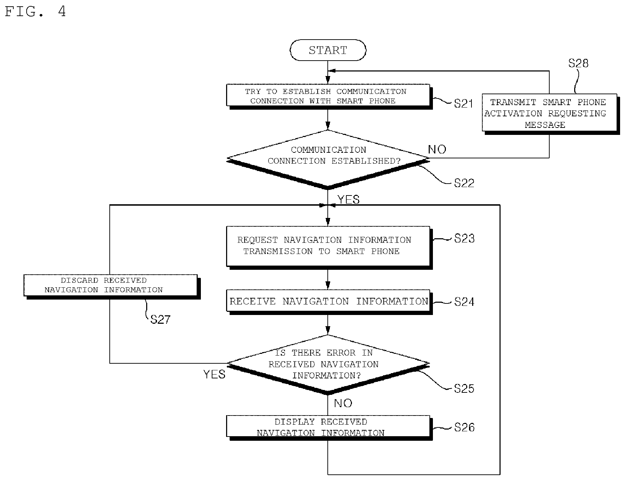

Hereinafter, the difference from Embodiment 1 will be mainly described with reference to the accompanying drawings. FIG. 4 is a flow chart illustrating an operation of a head-up display system according to preferred embodiment 2 of the present invention.

As illustrated in FIG. 4, in Embodiment 2, when power is supplied to the head-up display device 10 to start the operation of the head-up display device 10, the communication unit 12 tries the communication connection with the communication unit 32 of the smart phone 30 according to the control of the control unit 13 (step S21), and as a result, if the communication connection therebetween is established (YES in step S22), the processing proceeds to step S23 to request the smart phone 30 to transmit the navigation information, thereby repeating routines of steps S23 to S26, and if necessary, perform step S27, which is the same as the above-described Embodiment 1.

However, if the communication connection between the head-up display device 10 and the smart phone 30 is not established in step S22 (NO in step S22), the processing proceeds to step S28 to transmit a message (hereinafter, referred to as a 'mobile phone activation requesting message') requesting that the power supply of the smart phone is turned on to activate the smart phone, and the processing proceeds to step S21 to try to establish the communication connection again.

As the cause that the communication connection between the head-up display device 10 and the smart phone 30 is not established, there may be the case in which the power supply of the smart phone 30 is turned off, or even if the power supply is turned on, for example, the communication unit 32, the control unit 33, or the like of the smart phone 30 are out of order.

As the method for transmitting the mobile activation requesting message, there may be a method for displaying messages such as 'turn on a power supply of a mobile phone' on the display unit 11 of the head-up display device 10 in characters, a method for transmitting a message such as 'turn on a power supply of a mobile phone' by a voice message transmitting means (not illustrated), or a method for transmitting a character message and a voice message together.

If a driver turns on, for example, the power supply of the smart phone 30 in response to the mobile phone activation requesting message, in step S21 of FIG. 4, the communication connection between the head-up display device 10 and the smart phone 30 may be established.

The steps S21 to S27 other than the above-described steps are substantially the same as the steps S11 to S17 of Embodiment 1, and therefore will not be described in detail.

According to Embodiment 2, in addition to the effects of Embodiment 1 described above, when the communication connection between the head-up display device 10 and the smart phone 30 is not established, the power supply of the mobile phone is turned on by characters and/or voice, and thereby positively promoting the activation of the mobile phone.

### 3. Embodiment 3

Next, preferred Embodiment 3 of the present invention will be described.

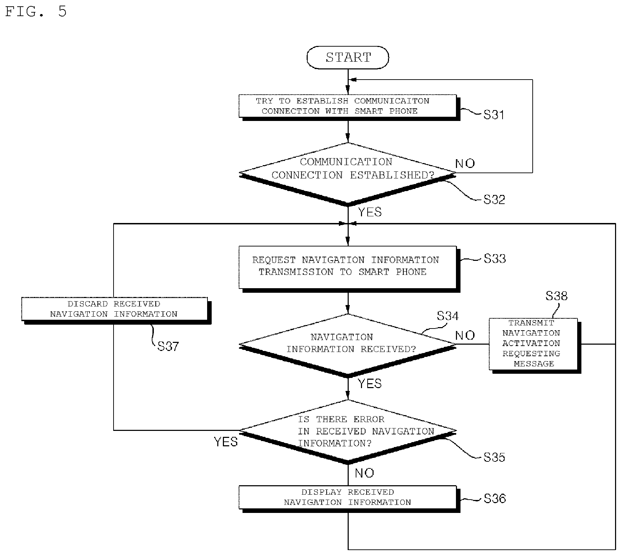

A configuration of a system of Embodiment 3 is the same as that of Embodiments 1 and 2, except that there is a difference in a part of the operation therebetween. Hereinafter, the difference from Embodiments 1 and 2 will be mainly described with reference to the accompanying drawings. FIG. 5 is a flow chart illustrating an operation of a head-up display system according to preferred Embodiment 3 of the present invention.

As illustrated in FIG. 5, in Embodiment 3, when power is supplied to the head-up display device 10 to start the operation of the head-up display device 10, the communication unit 12 tries to establish the communication connection with the communication unit 32 of the smart phone 30 according to the control of the control unit 13 (step S31), and as a result, if the communication connection therebetween is established (YES in step S32), the processing proceeds to step S33 to request the smart phone 30 to transmit the navigation information, which is the same as the above-described Embodiment 1.

According to Embodiment 3, in step S34, it is determined in step S33 whether the navigation information that the head-up display device 10 requests to the smart phone 30 is received, and if the navigation information is received, the processing proceeds to step S35 to perform the following processing, which is the same as Embodiments 1 and 2.

However, if it is determined in step S34 that the navigation information is not received from the smart phone 30 (NO in step S34), the processing proceeds to step S38 to transmit a message (hereinafter, referred to as a 'navigation module activation requesting message') requesting activation of a navigation module 31 of the smart phone 30, and the processing proceeds to step S33 to request the transmission of the navigation information again.

Despite the communication connection between the head-up display device 10 and the smart phone 30 is established in the determination in step S32, the main cause that the transmission of the navigation information from the smart phone 30 to the head-up display device 10 is not established may be that the navigation module 31 of the smart phone 30 is not activated.

As the method for transmitting the mobile activation requesting message, there may be a method for displaying messages such as 'turn on a navigation module' on the display unit 11 of the head-up display device 10 in characters, a method for transmitting a message such as 'turn on a navigation module' by a voice message transmitting means (not illustrated), or a method for transmitting a character message and a voice message together.

For example, if the driver activates (ON) the navigation module 31 of the smart phone 30 in response to the navigation activation request message, the navigation module 31 of the smart phone 30 transmits the navigation information to the head-up display device 10 via the communication unit 32, and the head-up display device 10 may receive and display the navigation information.

The steps S35 to S37 other than the above-described steps are substantially the same as the steps S15 to S17 or the steps S35 to S37 of Embodiments 1 and 2, and therefore will not be described in detail.

According to Embodiment 3, in addition to the effects of Embodiment 1 described above, despite the communication connection between the head-up display device 10 and the smart phone 30 is not established, the navigation module of the mobile phone is turned on by characters and/or voice when the head-up display device 10 does not receive the navigation information, and thereby positively promoting the activation of the mobile phone.

The above Embodiment 1 is suitable for the processing in the state in which the power supply of the smart phone 30 is turned on, and, the navigation module 31 is activated, the above Embodiment 2 is suitable for the processing in the state in which the power supply of the smart phone 30 is not turned on, and the above Embodiment 3 is suitable for the processing in the state in which the power supply of the smart phone 30 is turned on but the navigation module 31 is not activated.

Further, Embodiments 2 and 3 are performed in combination with each other, which may correspond to the state in which the navigation module 31 is not activated while the power supply of the smart phone 30 is not turned on.

Hereinabove, the present invention has been described by preferred Embodiments 1 and 2, but the present invention is not limited to the above-described Embodiments 1 and 2, and therefore may be changed as follows.

In the above Embodiments 1 and 2, the example, in which the smart phone as the means for supplying the navigation information to the head-up display device 10 of the head-up display system 100, has been described, but it is only an example. Therefore, any device that may provide the navigation information may be used. As other devices in addition to the smart phone, any electronic device that may communicate with the head-up display device 10 as the electronic device providing the navigation function helping path finding, or the like using the guide map such as a personal digital assistant (PDA) having a navigation as a unitary body or a navigation function embedded therein may be used.

Further, according to the above-described embodiments 1 and 2, the head-up display device of the present invention does not have a global positioning system (GPS) function, and uses the GPS function provided from the navigation module of the smart phone, but the head-up display device itself has the GPS function mounted therein to calculate the driving speed, or the like of the transport means using the GPS and display the calculated driving speed if the smart phone is not turned on, or a driver does not carry the smart phone and thus may not receive the navigation information provided from the smart phone.

Further, the above Embodiments 1 and 2 describe that the head-up display device 10 receives, from the smart phone 30, the navigation information such as the driving speed of the transport means, the information associated with a regulation of overspeed, the information associated with a section regulation, the remaining distance/or time up to a destination when the destination is set, the information associated with a switching direction in front of a current position like a left turn or a right turn, and the information on a toll gate, and displays the received navigation information, but it is not limited thereto. Therefore, when the smart phone receives a call, the phone reception information, or the like including caller information of the corresponding phone may be displayed as data in addition to the navigation information, and famous restaurant information, public institutions, famous tourist site information, or the like around the current position of the transport means may be additionally displayed.

Although the preferred embodiments and the modified example of the present invention have been described, but the preferred embodiments of the present invention may be variously changed and modified without departing from the scope of the present invention, and Embodiments 1 and 2 and the modified example may be performed alone and may be performed by the entire or partial combinations.

### [Description of Reference Numerals]

- 10:: head-up display device
- 11:: display unit
- 12, 32:: communication unit
- 13, 33:: control unit
- 14:: illumination sensor
- 30:: smart phone
- 31:: navigation module
- 100:: head-up display system

## Claims

1. A head-up display system comprising a head-up display configured to visually display information, and an electronic device configured to provide navigation information helping path finding using a guide map,
wherein the head-up display device comprises:
a head-up display communication means configured to establish a communication connection with the electronic device by requesting the communication connection to a communication means of the electronic device when power is applied to the head-up display device;
a display means configured to visually display the navigation information received from the electronic device through the head-up display communication means; and
a head-up display control means configured to control the head-up display communication means and the display means, and
the electronic device comprises:
an electronic device communication means configured to establish the communication connection in response to the communication connection request from the head-up display communication means;
a navigation means configured to generate the navigation information; and
an electronic device control means configured to control the electronic device communication means and the navigation means.

2. The head-up display system of claim 1, wherein the head-up display device further comprises an auditory signal output means configured to aurally provide the navigation information.

3. The head-up display system of claim 1, wherein the head-up display device further comprises:
a power supply configured to supply power to the head-up display device; and
a power switch configured to switch the power supply.

4. The head-up display system of claim 3, wherein the power switch is switched by interworking with an ignition key of a transport means in which the head-up display device is mounted.

5. The head-up display system of claim 1, wherein the display means is a transparent organic light emitting display device.

6. The head-up display system of claim 1, wherein the head-up display device further comprises an illumination sensor configured to measure illumination therearound, and
the display means controls brightness depending on the surrounding illumination measured by the illumination sensor.

7. A head-up display device which visually displays information visually displaying navigation information received from an electronic device configured to provide the navigation information helping path finding using a guide map, the head-up display device comprising:
a communication means configured to establish a communication connection with the electronic device by requesting the communication connection to the electronic device when power is applied to the head-up display device;
a display means configured to visually display the navigation information received from the electronic device through the communication means; and
a head-up display control means configured to control the communication means and the display means.

8. The head-up display device of claim 7, further comprising: an auditory signal output means configured to aurally provide the navigation information.

9. The head-up display device of claim 7, further comprising: a power supply configured to supply power to the head-up display device; and
a power switch configured to switch the power supply.

10. The head-up display device of claim 9, wherein the power switch is switched by interworking with an ignition key of a transport means in which the head-up display device is mounted.

11. The head-up display device of claim 7, wherein the display means is a transparent organic light emitting display device.

12. The head-up display device of claim 7, further comprising: an illumination sensor configured to measure illumination therearound,
wherein the display means controls brightness depending on the surrounding illumination measured by the illumination sensor.

13. A method for displaying navigation information of a head-up display device configured to visually display information visually displaying navigation information received from an electronic device configured to provide the navigation information helping path finding using a guide map, the method comprising:
a communication connection step of trying to establish a communication connection with the electronic device when power is applied to the head-up display device;
a receiving step of receiving the navigation information from the electronic device when the communication connection therebetween is established; and
a displaying step of visually displaying the received navigation information.

14. The method of claim 13, wherein in the communication connection step, a message requesting activation of the electronic device is output when the communication connection with the electronic device is not established.

15. The method of claim 13 or 14, wherein in the receiving step, when the navigation information is not received, the message requesting the activation of the navigation module of the electronic device is output.

16. The method of claim 14, wherein the message requesting the activation of the electronic device is at least one of a voice and characters.

17. The method of claim 15, wherein the message requesting the activation of the electronic device is at least one of a voice and characters.

18. The method of claim 13, further comprising: an error checking step of checking whether there is an error in the navigation information received in the receiving step,
wherein, if it is determined in the error check step that there is an error in the navigation information, the received navigation information is discarded.
